(19) Europäisches Patentamt
European Patent Office
Office européen des brevets

(11) Publication number: **0 002 566**
**A1**

(12) # EUROPEAN PATENT APPLICATION

(21) Application number: 78300614.1

(22) Date of filing: 09.11.78

(51) Int. Cl.$^2$: B 29 F 1/00
C 08 K 3/22, C 08 L 23/00

(30) Priority: 10.11.77 US 850370
10.11.77 US 850353

(43) Date of publication of application: 27.06.79 Bulletin 79/13

(84) Designated contracting states: BE DE FR GB NL

(71) Applicant: UNION CARBIDE CORPORATION
270, Park Avenue
New York, N.Y. 10017(US)

(72) Inventor: Angell, Richard Gordon, Jr.
691 Carlene Drive
Bridgewater, New Jersey 08807(US)

(72) Inventor: Cross, Laurence Herbert
999 Buxton Road
Bridgewater, New Jersey 08807(US)

(72) Inventor: Berger, Sidney Ethan
76 Morehead Drive
Rye, New York 10580(US)

(74) Representative: Baverstock, Michael George Douglas et al,
BOULT, WADE & TENNANT 34 Cursitor Street
London, EC4A 1PQ(GB)

(54) **Process for injection moulding thermoplastic articles with reduced combustibility, and articles produced thereby.**

(57) Process for injection molding thermoplastic articles with reduced combustibility comprising: maintaining a mold cavity at a back pressure sufficiently high substantially to prevent foaming of the injected thermoplastic melt; and injecting the thermoplastic melt into the mold cavity under a pressure exceeding the back pressure, wherein the melt contains from about 50 to 70% by weight of alumina trihydrate and from 1 to 12% by weight of water as a liquid processing aid.

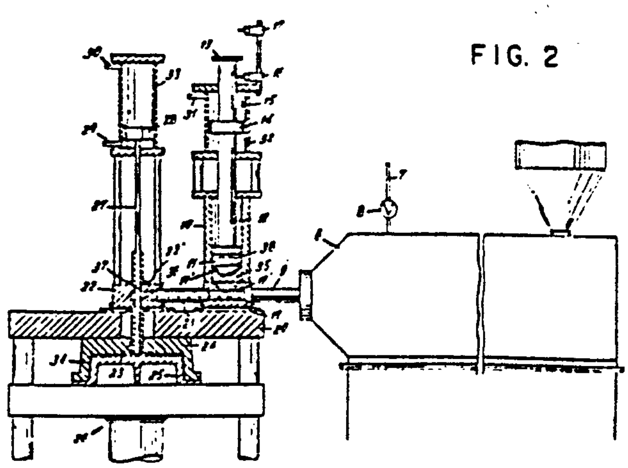

FIG. 2

EP 0 002 566 A1

TITLE MODIFIED
see front page

"PROCESS FOR INJECTION MOLDING THERMOPLASTIC ARTICLES WITH REDUCED COMBUSTIBILITY"

The present invention relates to a process for injection molding thermoplastic articles with reduced combustibility.

Injection molded thermoplastic articles which exhibit low combustibility properties would be a desirable addition to the marketplace. Whatever additives are used with the thermoplastic material to impart the reduction in combustibility should also have low toxicity, have low smoke generation, and be easily processible.

One additive which will impart a reduction in combustibility is alumina trihydrate (ATH), $Al_2O_3.3H_2O$. This material does have a low toxicity and low smoke generation. A problem with the material is that relatively high levels (≥50 percent ATH) of it are required to achieve the desired reduction in combustibility. These high levels of ATH present extreme problems in processibility of the compound. In addition, high filler loadings also usually result in a precipitous loss in impact strength.

This injection presents a way of overcoming the above-mentioned problems. Water as a processing aid is used to increase the throughput of the compound through the processing equipment, allowing a tough part with low combustibility to be formed.

In accordance with the present invention, a process is provided for the production of injection molded thermoplastic articles having reduced combustibility comprising: maintaining a mold cavity at a pre-selected back pressure sufficiently high substantially to prevent foaming of a thermoplastic melt to be injected therein; and injecting thermoplastic melt into the mold cavity under a pressure in excess of the back pressure to fill the mold cavity; the said thermoplastic melt containing from about 50 to 70% by weight of alumina trihydrate and from about 1 to 12% by weight of water as a liquid processing aid.

The invention employs thermoplastic polymers such as: high density polyethylene (HDPE), low density polyethylene, polypropylene, ethylene/vinyl acetate copolymer, ethylene/ethyl acrylate copolymer, and other homopolymers and interpolymers of olefins; polystyrene and styrene copolymers such as a polymer of acrylonitrile, styrene, and butadiene; polycarbonates such as 4,4'-bis-phenol-Abased polycarbonate, acetal homopolymers and copolymers; polyamides such as nylon 6 and nylon 6/6; polyaryl polyhydroxy ethers (e.g., the high molecular weight, base catalyzed, condensation product of 4,4'-bis-phenol-A and epichlorohydrin); polysulfones (e.g. a polymer that can be represented by the formula:

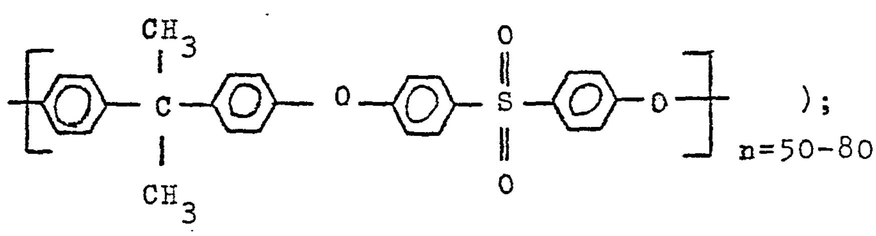

);

polyesters such as polyethylene terephthalate; polymethyl methacrylate and other acrylic polymers; and other thermoplastic polymers, which can be employed either singly or in mixtures. Conventional additives such as heat and light stabilizers, plasticizers, anti-oxidants, fillers, dyes and other colorants, can be employed in the thermoplastic polymer composition.

It is to be understood that the back pressure maintained on the mold cavity may be any pressure sufficient to prevent foaming and preferably at or above 150 psi. Most conveniently a back pressure of the order of about 200 to 450 psi is employed.

It has been found in the practice of the process of the invention that the pressure under which thermoplastic melt is introduced into the mold cavity may be any pressure greater than the back pressure of the mold. It has been found preferable, however, to employ a pressure above about 1500 psi and, most preferably, a pressure of about 2500 to 3500 psi as the introducing pressure.

It has also been found that, in order to impart to the injection molded thermoplastic articles the desired reduced combustibility characteristics, the thermoplastic melt should contain from about 50 to 70% by weight of alumina trihydrate. The employment of at least about 50% by weight of alumina trihydrate is required in order to achieve the UL 94 V-0 characteristics (described hereinbelow) and the employment of greater than about 70% by weight has been found to impart to the thermoplastic melt, flow characteristics which produce processing difficulties. A preferred range of alumina trihydrate content of from about 55 to 65% by weight is desired with the most preferred characteristics being imparted to the melt and resultant injection molded thermoplastic articles at about 60% by

weight of alumina trihydrate content.

It has been additionally found that water may be employed, totalling from about 1 to 12% by weight of the thermoplastic melt, as a liquid processing aid.

As discussed in more detail elsewhere herein, the water as processing aid addition serves to improve the flow characteristics of the thermoplastic melt which has been highly filled with alumina trihydrate.

Although the mechanism of the invention is not completely understood, it is believed that the water as processing liquid passes along in the process admixed in the liquid state and, as such, carries over into the molded article as a series of liquid masses, providing no gross foaming characteristics to the resultant molded article. The water ultimately diffuses out, leaving an article of slightly lower density and containing some fine pores. This phenomenon is exhibited up to about the volume fraction of the water used in the molding.

It is, however, to be understood that it is not the initial water processing liquid retention which provides the high combustibility resistance of the articles of the present invention, but rather, the high degree of filling with ATH. This high resistance to combustibility is retained even after the water diffuses from the resultant articles.

The equipment suitable for use in the practice of the process of the invention is similar to but modified from that used to process conventional low pressure process structural foam (see, for example, Angell, U.S. Patents Nos. 3,268,636, 3,436,446 and 3,988,403 and particularly the equipment of Fig. 1 of U.S. Patent No. 3,436,445).

In the Drawings:

Fig. 1 is a graphical representation of a relationship between the viscosity and the percentage constant of alumina trihydrate in the thermoplastic melt at two different shear rates;

Fig. 2 is a side elevational view substantially in cross-section, of apparatus suitable for the practice of the process of the present invention; and

Fig. 3 is a plan view of a finger mold capable of use in practicing the process of the present invention, referred to hereinbelow as Mold No. 1;

Fig. 4 is a plan view of a cavity mold capable of use in practicing the process of the invention, referred to hereinbelow as Mold No. 2;

Fig. 5 is a curve showing the relationship between Dart Drop impact strength and the varying number of ethoxy repeat units of the silane coupling agent employed for otherwise identical practice of the process of the invention in the production of injection molded articles;

Fig. 6 is a curve showing the relationship between Dart Drop impact strength and the varying back pressure applied to the mold cavity for otherwise identical practice of the process of the invention in the production of molded articles;

Fig. 7 is a curve showing the relationship between Dart Drop impact strength and the varying percentage of water used as a processing aid for otherwise

identical practice of the process of the invention in the production of molded articles;

Fig. 8 is a set of curves showing both the tensile strength and tensile modulus as a function of varying percentage of water used as a processing aid in molding for otherwise identical practice of the process of the invention in the production of molded articles;

Fig. 9 is a curve showing the relationship between flex modulus and the varying percentage of water used as a processing aid for otherwise identical practice of the process of the invention in the production of molded articles; and

Fig. 10 is a curve showing the relationship between heat distortion temperature as a function of varying percentage of water used as a processing aid in otherwise identical practice of the process of the invention in the production of molded articles.

The additions to the apparatus which enable one to practice the invention are as follows:

First, the conventional structural foam apparatus provides means for the introduction of nitrogen gas into the extruder barrel to produce the foamable material. The process of the present invention requires the introduction of water as a processing liquid into the extruder barrel through line 7 of Fig. 2 of U.S. patent No. 3,436,446 in place of the gas. As a result of the high pressure (~1500 psi) and temperature (~375-400°F.) in the extruder barrel and the mixing action of the screw,

the liquid introduced is distributed throughout the polymeric compound as it proceeds through the extruder.

The second difference from the conventional low (clamp) pressure structural foam apparatus and that of the apparatus for practicing the invention is at the mold. The conventional apparatus allows the material which enters the mold cavity to expand and produce a foam product. If that procedure were to be used for the liquid-containing compound, the fast rate of pressure drop would cause the liquid to flash to vapor. This would result in a foamed molded part or imperfections in the body or surface of the part. To inhibit this undesirable feature, the mold cavity is back-pressured, as shown by way of example, through conduit 40 in the mold of Fig. 3 of the drawings, prior to introducing the molten polymeric material. The back pressure is sufficiently high to inhibit most of the liquid from flashing. Hence the articles are essentially solid. For most materials, for the levels of liquid employed, the pressure required to reduce the flashing is of the order of at least about 100 psi. The actual pressure required to completely inhibit flashing is dependent on the particular liquid used, its vapor pressure, the melt temperature, and the rheology of the composition. (The final molded parts are known to contain substantially the same amount of liquid as was introduced in the extruder. Hence, the parts are not absolutely solid polymeric materials. In fact, it has been shown that molded parts from which the fluid has diffused will reabsorb about the same amount of fluid as was used in

the molding. Hence, molded parts do have void-volumes roughly equivalent to the concentration of fluid incorporated. These are assumed to be pore- or channel-like voids. To reiterate then, the parts appear from visual inspection to be essentially solid. That is, they are not visibly cellular in the sense of structural foam parts.)

The remainder of the process is substantially non-critical and within the skill of the art. This includes cooling the part sufficiently so that the back pressure may be relieved without foaming or other distortion and the part removed from the mold cavity.

The importance of water as processing aid in the system rests on the ability to process polymeric systems with high levels of filler loading. As pointed out above, one ramification of this is the ability to process polymeric systems filled with ATH for reduced combustibility. A graphical representation of the problem is shown in Fig. 1. The apparent viscosity-shear rate curves for a series of compounds containing various filler concentrations were obtained by use of an Instron Rheometer. The compounds were compounded in an 8-pound Banbury mixer, granulated, and then tested in the Rheometer, using standard procedures at 190°C. The die diameter was 0.030" with a length-to-radius ratio of 67.1 No Rabinowitsch corrections were made to the shear rate and no end corrections made for the shear stress. The apparent viscosities at the lowest shear rates obtainable with the above-mentioned Rheometer were then plotted

against the percent ATH of each compound. The sharp rise in viscosity at about 40 percent ATH is indicative of the increasing difficulty in processing the compounds.

The effect and usefulness of the liquid processing aid may be seen by comparing the throughput rates of filled polymeric systems molded with and without the use of liquids as set forth in Table I below. Method 1, as referred to in the Table, relates to the case in which material is extruded from the nozzle into the air. Method 2, as referred to in the Table, relates to the case in which parts are molded into a 6" x 18" x 1/2' rectangular mold cavity and the indicated back pressure used. Table 1 shows that the use of a liquid processing aid increases the rate of flow through the nozzle and into and within the mold cavity.

TABLE I

| Polymer | Percent liquid rel. to compound | Method Used | Mold Back Pressure (psig) | Rate of Flow (lb/sec) | % Increase in rate of flow due to use of liquid | Example No. |
|---|---|---|---|---|---|---|
| poly(methyl methyl-acrylate) (PMMA) | None | 1 | --- | 0.0083 | --- | 1 |
| | 1.2 $H_2O$ | 1 | --- | 0.031 | 273 | 2 |
| propylene homopolymer (MF=5;ASTM-D-1238, ρ = 0.905 gm/cc) | None | 2 | 0 | 0.031 | --- | 3 |
| | 8.7 $H_2O$ | 2 | 0 | 0.095 | 205 | 4 |
| High impact (rubber modified) polystyrene (MI = 0.93 gm/10 min. ASTM-D-1238E; Heat Distortion Temp. = 75.3°C., ASTM-D-648) | None | 2 | 400 | 0.027 | --- | 5 |
| | 5.9 $H_2O$ | 2 | 400 | 0.097 | 256 | 6 |

Note: All compositions contain 40 parts by weight of listed polymer, 60 parts by weight of ATH having an average particle size of about 1 micron, and listed amount of indicated liquid.

Referring now to Fig. 2 of the drawings, the preferred apparatus of this invention for carrying out the present method is shown to include an extruder 6 having attached thereto a line 7 for feeding a liquid processing aid directly into the barrel of extruder 6. A valve 8 is provided on line 7 to control the feeding. Line 9 connects the extruder 6 to the internal conduit 19' of a base member 19 which is shown resting on a support member 20. Extending upward from the base member 19 is an accumulator device which includes a cylinder 10 and a piston 11 reciprocally movable therein. The piston 11 is shown having a frusto-conical head 11' and is machined to nearly the same diameter as cylinder 10 to provide a seal between the cylinder 10 and the piston 11. Attached to the rear of piston 11 and extending upward therefrom is a shaft 12.

A flange member 13 is attached to the other end of the shaft 12 and a piston 14 is located on the shaft at a position intermediate the piston 11 and the flange 13. The piston 14 is adapted to reciprocate within a piston housing 32. It should be noted that flange 13 is located at the uppermost functional end of the shaft 12 and need not be located at the actual physical end thereof. The configuration of the flange 13 is critical only to the extent that it must extend from the shaft 12 and contact switches 16 and 17 during the reciprocal movement of the shaft 12.

Alternatively, photoelectric type switches can be employed if desired, thus eliminating the need for a

projecting member on the shaft 12. A pair of photoelectric units can be positioned such that shaft 12 blocks the light path of lower unit when the shaft moves upwardly from its lowest position and blocks the light path of an upper unit when it reaches the desired upper position.

Leading from the internal conduit 19' of the base member 19 is a line 21 which is connected to an internal conduit 22' of a second base member 22 which is also resting on the support member 20. Extending downward from the base member 22, and through the support member 20 is a filling nozzle 23. It should be evident that a plurality of filling nozzles can be employed to mold one or more articles. The lower end of the nozzle 23 extends to and is flush with a mold cavity defined by a male mold half 25 and a female mold half 24. Mold half 24 is conveniently affixed to the support member 20 and the mold half 25 is supported by a reciprocating bed 26 adapted to provide for easy separation of the mold halves 24 and 25 to facilitate product removal. Slidably mounted in the nozzle 23 and the base member 22 is a rod 27. The upper end of the rod 27 is provided with a piston 28 which reciprocates within a piston housing 33. The housing 33 is provided with a pair of conduits 29 and 30 which are alternately connected to a source of gas under pressure.

The operation of the preferred apparatus shown in Fig. 2 is as follows. Thermoplastic material is fluxed in the extruder 6. Water, as liquid processing aid, is admitted under pressure directly into the barrel of the ex-

truder by means of line 17 and is admixed therein with the melted thermoplastic. The extruder 6, which is in continuous communication with an expanding accumulation zone 35 defined by the cylinder 10, the piston 11 and the base member 19, continuously extrudes the mixture of thermoplastic material and liquid processing aid through line 9, into the zone 35, and against the piston 11. As the mixture is fed from the extruder into the zone 35, the piston is forced from its lowermost position to an upper, predetermined position. In Fig. 2, the lowermost position of the piston 11 is reached when the piston 11 comes in contact with the base member 19. The upward travel of piston 11 and piston 14 is resisted by means of a gas under pressure in the region 15 above the piston 14 in the piston housing 32. The phrase "gas under pressure" is intended to include any suitable hydraulic fluid conventionally used in such apparatus. In addition, the region 15 in the piston housing 32 is provided with a conduit 31 which is in communication with a source of gas under pressure. As the material from the extruder forces piston 11 upward, and at the same time forces piston 14 upward, the gas in region 15 is compressed. Since the charging of the zone 35 is opposed by the piston 11, the filling of the zone 35 cannot start until the extruder pressure exceeds the back-pressure of the piston 11. As the piston 11 moves upward, the gas volume in region 15 is decreased and the gas pressure is increased. The extruder pressure must continuously exceed the increasing piston pressure during the expansion

of the zone 35. Alternatively, during the expansion of the zone 35, the pressure of the gas in region 15 can be regulated so that a substantially constant force is applied to the piston 14. In any case, the mixture being charged into the expanding zone 35 must be maintained at a pressure above which foaming occurs. While a pressure of as low as about 500 psi will normally prevent foaming of the mixture, pressures of at least 1500 psi have been found to give best results. Pressures in excess of 10,000 psi are usually not required for proper operation of the accumulator device and normally should be avoided because operating expenses increase with increasing pressures.

In addition, the cylinder 10 is provided with heating means, not shown, to maintain the mixture in the molten state and thus prevent solidification of thermoplastic material therein. It should be noted, however, that no heating of the mixture in the cylinder 10 is required. Heat is applied to the mixture in the extruder 6 and is only maintained in the cylinder 10.

The piston 11 travels upward until the flange 13, carried by the shaft 12, contacts the switch 17 located at a predetermined position. In a manner well known in the art, the activation of the switch 17 causes gas under pressure to enter piston housing 33 through conduit 29 and produces an upward motion of the piston 28. The lower end of the rod 27 is thereby withdrawn from the nozzle 23 until it reaches a position indicated by the reference numeral 37. Communication between the mold defined by mold halves 24 and 25 and the zone 35 is

thus established. At the instant communication is established, the mixture is forced from the accumulation zone 35 into the mold because the pressure within the region 15, which has now become greater than the pressure within the zone 35, causes the downward motion of the piston 11 until it reaches its lower-most position. If necessary, the line 21 and the base member 22 can be provided with heating means, not shown, to prevent solidification of thermoplastic material therein.

When the piston 11 reaches its lower-most position the zone 35 is essentially collapsed and the flange 13 contacts the switch 16, and in a manner well known in the art, gas under pressure is caused to enter the piston housing 33 through conduit 30 thereby producing a downward movement of the piston 28 and the rod 27. At the instant the rod 27 enters the nozzle 23 at the point 36, communication is terminated between the mold and the accumulation zone 35 at a point where the pressure is above the foaming pressure of the mixture. As the rod 27 travels downward it forces the mixture in the nozzle 23, that is, between the point 36 and the mold, into the mold and the bottom of the rod 27 comes flush with the molded article 34. In this manner, a sprue-free molded article is produced and the formation of an unfoamed slug in the system prevented. After cooling, the mold halves 24 and 25 are separated and the sprue-free molded article 34 is removed. It should be evident that articles can be molded according to the present invention having either a sprue or a depression simply by adjusting the

rod 27. While it is preferred to mold sprue-free articles, the configuration of certain molded articles will be able to tolerate a sprue or a depression.

The flow of gas under pressure through conduits 29 and 30 is controlled by means of a valve system actuated by the switches 16 and 17 in a manner well known in the art.

The switch 17 is positioned in accordance with the amount of material which is required to be charged into the mold. The greater the distance between the switches 16 and 17, the greater will be the upward travel of the piston 11. Consequently a larger amount of material will be stored in the accumulation zone 35 and subsequently forced into the mold. Conversely, decreasing the space between the switches 16 and 17 decreases the amount of material which will be forced into the mold.

The temperature of the mold is not critical. Cold molds, e.g. at room temperature, about 20°C., can be used to produce molded articles. Lower mold temperatures are preferred since the time required for cooling the article in the mold is shorter. Higher mold temperatures permit more flow of the molten mixture in the mold prior to cooling than with a cooler mold.

From the foregoing description, it is evident that the process and preferred apparatus of this invention can be employed to rapidly, efficiently, and automatically mold filled thermoplastic articles on a batch, semi-continuous or continuous basis.

The extruder 6 of the apparatus of Fig. 2 of the drawings used in the examples set forth herein employed a 2-1/2" diameter screw with a 24:1 length to diameter ratio. A 40 HP DC motor was employed utilizing a silicon control rectifier which pumped approximately 120 lb./hr. at 125 rpm. There were four heating zones on the barrel. The two-stage extruder screw had 24 flights. In the first stage, there were five feed flights at 0.440" depth, four transition flights, and four metering flights at 0.110" depth. There was a 0.050 inch deep blister at the end of the first stage. After one decompression flight at 0.500" depth, in which the fluid injection port was located, there was one transition flight, 6-1/2 metering flights at 0.135" depth, and two flights of LeRoy mixing head. A 50 ton press was used with this extruder.

In the mold frame 24 (overall length 9" x 20") shown in Fig. 3 of the drawings, the back pressure gas was maintained through inlet port 40 (1/8" diam., 1-1/2" depth) which communicated with gas manifold channel 42 (1/4" wide, 1/8" depth) which, in turn, communicated through ports 44 (3/32" x 1/32") with finger-shaped channels 46 (5-3/8" x 1/2" x 3/8") which were intercommunicating throughout the interior of the mold cavity. The channels 46 were formed between spacer elements 48 (5-3/8" x 1"). Thermoplastic melt material was introduced into the mold cavity through fill port 50 (3/4" diam.). There was an "O"-ring channel 52 (1/8" width)

on both sides of this mold to reduce the loss of gas from the mold and contain the prescribed back pressure.

As employed herein in connection with a measure of the combustibility of injection molded thermoplastic articles, it is to be understood that the specifications for degrees of combustibility are those set forth by Underwriters Laboratories Inc. as "Standard For Tests For Flammability of Plastic Materials For Parts In Devices And Appliances," designated as UL 94 in their specification dated July 30, 1976 and set forth in Test 3 therein as "Vertical Burning Test for Classifying Materials 94 V-0, 94 V-1, or 94 V-2".

A major objective of this invention is the processing of polymeric compounds which have reduced combustibility. The ATH filled polymer systems satisfy that objective. As shown in Table II, the use of 60 parts ATH allows the production of molded articles which pass the UL 94 V-0 flame test for 3/8-inch thick samples. Twenty-three and a half and fifty percent ATH filled parts (even with 18.8 percent water) fail the UL 94 V-0 test. Sixty percent ATH filled high density polyethylene (HDPE) parts pass the UL 94 V-0 test at the same thickness. It is important to also point out that the impact resistance as measured by the notched Izod test shows a significant increase for the samples molded in the presence of water and that even when those samples are dried, their Izod values remain quite close to that of a non-filled HDPE sample.

TABLE II

All samples were molded in a 50-ton, modified structural foam machine using a high density polyethylene material (HDPE) of MI = 8 gm/10 min (ASTM-D-1238E) and specific gravity of 0.96 gm/cc. The ATH used has a 1$\mu$ average particle size. The mold was as shown in Fig. 3, having dimensions set forth above. In each case the extruder temperatures were set at 350°F. and the transfer lines and accumulator were set at 370°F.

TABLE II
(Continued)

| PREDRYING | | | | | | POST DRYING (70°C @ least 2 days) | | | MOLDING CONDITIONS | | | | | |
|---|---|---|---|---|---|---|---|---|---|---|---|---|---|---|
| Example No. | Parts of HDPE | Parts of ATH | Percent $H_2O$ | UL 94 V-0 Results | Notched Izod (ft-lb) | Percent weight loss | UL 94 V-0 Results | Notched Izod (ft-lb) | Mold Temp. (°C) | Fill Time (sec) | Back Pressure on mold | Extr. Pressure barrel (psi) | Extr. Pressure discharge (psi) | Extr. RPM |
| 7 | 76.5 | 21.5 | 27 | Fail | - | - | - | - | 70 | - | 400 | 700 | 2900 | 20 |
| 8 | 50 | 50 | 0 | Fail | 0.31 | - | Fail | - | 70 | 9 | 0 | 1300 | 3100 | 20 |
| 9 | 50 | 50 | 18.8 | Fail | 1.01 | - | Fail | 0.03 | 70 | 5 | 400 | 1000 | 2800 | 12 |
| 10 | 40 | 60 | 5 | Pass | 1.27 | 7 | Pass | 0.06 | 70 | 19 | 425 | 1200 | 3500 | 12 |
| 11 | 100 | 0 | 0 | Fail | 0.90 | - | - | - | - | - | - | - | - | - |

The comparative combustibility test data for various % ATH/% HDPE compounds are shown in Table III, below. It is to be noted that at 50% ATH, one sample passes the UL 94 V-1 test, one marginally fails the V-1 test and two others fail it. Fifty percent (50%) ATH/50% HDPE compounds do, therefore, have a reduced combustibility, albeit marginally so. (F = Fail, P = Pass).

TABLE III

| Parts of ATH** | Parts of HDPE** | Percent $H_2O$ used in Molding | UL-94 Results V-0 | V-1 | V-2 |
|---|---|---|---|---|---|
| 10 | 90 | 18.6 | F | F | F |
| 23.5 | 76.5 | 27 | F | F | F |
| 30 | 70 | 11 | F | F | F |
| 50 | 50 | 0 | F | P | P |
| 50 | 50 | 6 | F | F* | F* |
| 50 | 50 | 9.3 | F | F | F |
| 50 | 50 | 18.8 | F | F | F |
| 60 | 40 | 5 | P | P | P |

Note: All samples dried (70°C.; greater than or equal to 48 hours) prior to testing.

* marginally

** parts by weight

As set forth hereinabove, the employment of greater than 70% by weight of ATH results in imparting to the melt flow characteristics which produce processing difficulties.

Accordingly, the use of water as a liquid process-aid allows greater throughput rates to be achieved and, as a

particularly useful feature, allows parts with sufficiently high concentrations of ATH to be molded such that reduced combustibility parts with good impact strength may be produced.

As referred to herein, the Dart Drop impact test consists of dropping a weighted dart (about two pounds) with a 1-1/2 inch hemispherical tip into a specimen firmly fixed by a 3-inch diameter circular clamp. The failure is noted by the appearance of a slight crack on the surface of the part.

This invention additionally presents a process for molding high density polyethylene articles which have not only reduced combustibility but also excellent impact strength. Processibility of the ATH-filled high density polyethylene compounds is improved by addition of water as a liquid processing aid as well as by use of the specific class of silane compatibility agents described hereinbelow.

In accordance with this additional aspect of the present invention, a process is provided for the production of injection molded high density polyethylene articles having reduced combustibility and high impact strength comprising: maintaining a mold cavity at a preselected back pressure sufficiently high to substantially prevent foaming of a high density polyethylene material melt to be injected therein; injecting said melt into said mold cavity under pressure in excess of said back pressure to fill a mold cavity; said high density polyethylene material melt containing: (a) from about 50 to 70% by

weight of alumina trihydrate, (b) from about 1 to 12% by weight of water as a processing aid, and (c) from about 0.5 to 3% by weight of a methoxy polyethylene glycol propyltrimethoxy silane having the formula:

$$CH_3O(C_2H_4O)_n\ C_3H_6\ Si(OCH_3)_3$$

wherein n represents the average number of ethoxy repeat units between 3.0 and 11.0

It is to be understood that the back pressure maintained on the mold cavity may be any pressure sufficient to prevent foaming and preferably at or above 150 psi. Most conveniently a back pressure of the order of about 200 to 450 psi is employed.

It has been found in the practice of the process of the invention that the pressure under which thermoplastic melt is injected into the mold cavity may be any pressure greater than the back pressure of the mold. It has been found preferable, however, to employ a pressure above about 1500 psi and, most preferably, a pressure of about 2500 to 3500 psi as the injection pressure.

It has also been found that, in order to impart to the injection molded articles the desired reduced combustibility characteristics, the melt should contain from about 50 to 70% by weight of alumina trihydrate. The employment of at least about 50% by weight of alumina trihydrate is required in order to achieve the UL 94 V-0 characteristics (described hereinbelow) and the employment of greater than about 70% by weight has been found to impart to the melt, flow characteristics which produce processing difficulties. A preferred range of alumina

trihydrate content of from about 55 to 65% by weight is desired with the most preferred characteristics being imparted to the melt and resultant injection molded articles at about 60% by weight of alumina trihydrate content.

As discussed in more detail elsewhere herein, the employment of water as a processing aid (in amount from about 1 to 12% by weight) serves to increase the rate of flow of the thermoplastic melt which has been highly filled with alumina trihydrate.

To attain V-0 levels of reduced combustibility, 60 percent ATH filled HDPE has been found to be required. At that level of filler loading, the impact strength of the materials is not very good. To improve the impact strength, a surface treatment agent must be applied to the ATH to improve compatibility of the ATH and the HDPE. A number of compatibility agents have been evaluated, some yielding an improvement in impact strength. A number of methoxy polyethylene glycol propyl trimethoxy silanes were tested which have varying n average ethoxy repeat units in the formula:

$$CH_3O(C_2H_4O)_n\ C_3H_6\ Si(OCH_3)_3$$

The compatibility agents tested and the results of such testing are shown in Table IV.

TABLE IV

| Compatibility Agent No. | Compatibility Agent |
|---|---|
| 1 | Methoxy polyethylene glycol propyl trimethoxy silane with 3 ethoxy repeat units or $CH_3O(C_2H_4O)_nC_3H_6\ Si(OCH_3)_3$, where n = 3 on the average. |
| 2 | Same as 1 - except n = 7.2 |
| 3 | Same as 1 - except n = 11 |
| 4 | Same as 1 - except n = 17.5 |
| 5 | Octyl triethoxy silane $CH_3(CH_2)_7\ Si(OC_2H_5)_3$ |

TABLE IV
(Continued)

All product samples were molded with 60 parts by wt. of ATH, 40 parts by wt. of HDPE and 1 part by wt. of compatibility agent. Mold temperature of 70°F. in all cases.

| Compatibility Agent Number | Product Number | Percent $H_2O$ | Dart Drop, 1/4" After Heat Aging 70°C ≥ 48 hrs (ft-lb) | Notched Izod 3/8" thick (ft-lb) after same heat aging | Back Pressure on mold (psi) | Fill Time (sec) |
|---|---|---|---|---|---|---|
| 1 | 1a | 10 | 17 | --- | 200 | 2 |
| | 1b | 10 | 17 | --- | 300 | 2-3 |
| 2 | --- | --- | 20.5-21 (interpolated to 10% $H_2O$) | | 200-300 | ~2-5 |
| | 2 | 6.6 | 33 | 2.05 | 430 | 2 |
| 3 | 3a | 9.85 | 14 | --- | 200 | 10-15 |
| | 3b | 9.85 | 17 | --- | 300 | 15 |
| 4 | 4a | ~7 | 2 | --- | 200 | <1 |
| | 4b | ~7 | 3-1/2 | --- | 300 | <1 |
| 5 | 5 | 5 | <1 | 0.43 | 450 | 2 |

It should be noted from Table IV that, of the products 2 and 5 which were tested initially for impact strength by means of the notched Izod test, the product prepared with the methoxy polyethylene glycol propyl trimethoxy silane of 7.2 ethoxy repeat units (Product No. 2) had an Izod greater than 1 -- its value was 2.05 ft-lb/inch of notch. Further evaluations of Dart Drop Impact strength of products made with other compatibility agents showed that Product No. 5 gave much lower impact strengths than Product No. 2, the latter having a Dart Drop Impact value of 33 ft-lb for the particular molding conditions used.

Note also from Tables IV and V that the Product numbered 2 (which has 60 parts ATH) gives an impact strength of 33 ft-lb (other samples made with this same compatibility agent gave as high as 44 ft-lb and that a structural foam article molded as Product No. 8 (Table V), which has no ATH and a 0.85 specific gravity, has an impact strength of 28 ft-lb. The use of the selected silane compatibility agent acts as a coating applied to the ATH surface and helps to make the ATH more compatible with the HDPE. Note also that the Product No. 6, 60 parts ATH without any compatibility agent, has a very low impact strength -- 1-1/2 ft-lb in the Dart Drop test and 0.18 ft-lb/inch of notch in the Izod test.

TABLE V

| Prod No. | MATERIAL Parts HDPE | Parts ATH | Percent $H_2O$ | Solid or Foam and $\rho$ | Dart Drop 1 1/4" After Heat Aging 70°C ≥48 hrs (ft-lb) | Notched Izod (ft-lb/ inch of notch) | Back Press (psi) |
|---|---|---|---|---|---|---|---|
| 6 | 40 | 60 | 5 | Solid | 1 1/2 | 0.18 | ∿350 |
| 7 | 100 | 0 | 0 | Solid | >68 | --- | --- |
| 8 | 100 | 0 | 0 | Foam, $\rho$=.85 | 28 | --- | --- |
| 9 | 100 | 0 | 0 | Foam, $\rho$=.75 | 4 | --- | --- |
| 10 | 100 | 0 | 0 | Foam, $\rho$ =.6 | ∿3 | --- | --- |

Referring to Table IV hereinabove, the data for the products numbered 1, 2, 3, and 4 show that the curve of Dart Drop Impact versus Number of Repeat Units in the compatibility agent has a definite maximum. Fig. 5 of the drawings shows the graphical results. (Note that the Dart Drop value for n = 7.2 was interpolated to 9.9 percent water to match the percent water used for n = 3 and 11. At n = 17.5 the only data obtained were at 7.1 percent $H_2O$ and they were plotted directly.)

Fig. 5 shows a maximum of approximately 21 ft-lb at about n = 7.2 repeat units. Along with the specific compatibility agent used to treat the ATH, there are a number of other processing variables which directly affect the resultant molded article. The variables studied include: the back pressure applied to the mold, the compounding time, the percent water used in molding, and the percent compatibility agent on the ATH.

The pressure applied to the mold cavity prior to injection of the plastic is termed the back pressure. Parts molded at different back pressures have very different mechanical properties. As seen in Fig. 6, the Dart Drop Impact strength of samples molded at the specifications of Table IV show a significant increase with back pressure. Up to 400 psi back pressure, the Dart Drop Impact strengths increase to 44 ft-lb. Hence, to attain the largest impact strength, the back pressure should be in the 300-400 psi range.

TABLE VI

All of these articles were molded with 60 parts ATH, 40 parts HDPE (8 melt index, 0.96 spec. grav.), 1 part compatibility agent No. 2, and 7-8 percent water. Mold No. 2 at 70°C was used throughout. All samples were dried (70°C, ≥ 48 hours) before testing. All parts are by weight. In all cases, the extruder speed was 12 rpm and the press tonnage was 50 tons.

| Time Compounded In Banbury (Min) | Product No. | Back Pressure (psi) | 1/4" Dart Drop Impact (Psi) | Fill Time (Sec) | Extr. Press. Discharge (Psi.) |
|---|---|---|---|---|---|
| 4 | 11 | 0 | 3 | 1.5 | 2750 |
| | | 100 | 6 | 2 | 2750 |
| | | 200 | 30 | 3 | 2750 |
| | | 300 | 30 | 3 | 2750 |
| | | 400 | 44 | 3 | 2750 |
| 4 | 12 | 100 | 5 | 2 | ---- |
| | | 200 | 8 | 2 1/2 | ---- |
| | | 300 | 30 | 2 | ---- |
| 10 | 13 | 0 | 5 | 1 | 3100 |
| | | 300 | 23 | 3 | 3100 |
| 10 | 14 | 100 | 8 | 2 | ---- |
| | | 200 | 24 | 2 | ---- |
| | | 300 | 40 | 4 | ---- |
| ~ 8 | 15 | 0 | 8 | 1 | ~3100 |
| | | 200 | 24 | 2 | ~3100 |
| | | 300 | 28 | 2 1/2 | ~3100 |

The values for mechanical properties of the compounds made even with the same selected compatibility agent are not only dependent on the back pressure used in the molding, but also, and to a substantial extent, on the manner in which the compounds are made and the concentration of water used. Although any method of compounding of the treated-with-silane ATH and the polyethylene will produce a product which will feed into the extruder, the use of a Banbury has, to date, proved the most satisfactory. Any compounding procedure which fluxes and gives some history of high shear rate for a sufficiently long time should be satisfactory. In terms of the Banbury operation, Table VII shows that the Dart Drop Impact values are substantially lower for the case of either 3 minutes or 0 (zero) minutes of compounding after fluxing in the Banbury. Note also that the latter sample does not even pass the UL 94 V-0 test.

The last factor investigated which can greatly affect the mechanical properties, and impact strength in particular, of molded parts is the percent water used during the molding. Even though in all cases the samples were dried prior to testing, large differences in the impact strengths were found as a function of the concentration of water used for the molding process. This indicates that the presence of the water affects the interfacial action which can occur. The specific compatibility agent acts synergistically with certain concentrations of water. Specifically, Figs. 7, 8, 9 and 10 show how one can determine the concentration of water to use. For most cases

it is expected that the maximum impact strength will be desirable (Fig. 7) even at the expense of tensile and flexural properties and heat distortion temperature (Figs. 8, 9 and 10). If that is the case, approximately 8 percent water should be used in the molding. If slight decreases in impact strength are acceptable, the other mechanical properties can be increased by a decrease in the concentration of water used in molding. It is especially noteworthy that with no or very low concentration of water (< 2 percent), the impact strength is extremely low, < 1 ft-lb.

Another variable which must be considered is the level of compatibility agent used. The compatibility agent No. 2 was used to treat ATH. Compounds at 60 percent treated ATH/40 percent HDPE (MI = 8, spec. gr. 0.96) were prepared. As seen in Table VIII, above 1 percent silane there is a slight loss in Dart Drop impact strength. Notice also that at the 3 percent level of this coupling agent, the sample only marginally passes the UL 94 V-0 test. Good impact strengths can be obtained with approximately 1 percent concentration of compatibility agent No. 2. This is the preferred level. As expected, the use of the untreated ATH (zero percent silane) yields a product with poor impact strength (3 ft-lb); thus pointing out the necessity of the compatibility agent.

TABLE VII

The HDPE used for this series of tests has a 0.96 specific gravity and 8 melt index and was present in the compound at 40 parts by weight. The ATH had a

BAD ORIGINAL

concentration of 60 parts and has a $1\mu$ average particle size. The methoxy pohyethylene glycol propyl trimethoxy silane with 7.2 repeat units (compatibility agent No. 2 of Table IV) was used throughout at the 1 part level. All samples were molded in Mold No. 2 against 300 psi back pressure. From scanning electron micrographs (1700X) and x-ray energy spectrographs, all three samples had excellent apparent dispersions of the ATH.

TABLE VII
(Continued)

| Time in Banbury for compounding (minutes) | Percent $H_2O$ used in Molding | 1/4" Dart Drop Impact after drying @ 70°C ≥ 48 hrs (ft-lb) | Pass or Fail UL 94 V-0 Test 1/4 Inch Thick | Product Number | Fail Time (sec) | Extr. Pres. barrel (psi) (pre-field) | Extr. Pres. discharge (psi) | Extr. RPM |
|---|---|---|---|---|---|---|---|---|
| 10 | 9.7 | 22 | Pass | 16 | 6 | 1100 | 2500 | 12 |
| 3 | 7.1 | 16 | Pass | 17 | ~4-13 | 1000 | 2500 | 18 |
| 0 | ~8 | 10 | Fail | 18 | 3 | ---- | 2100 | ~27 |

TABLE VIII

All compounds prepared for 10 minutes in the Banbury; all specimens molded with 300 psi back pressure and all were oven dried (70°C, ≥ 48 hours) prior to testing. Mold No.2 used in all cases.

| Percent Compatibility Agent Number 2 | Percent $H_2O$ used in Molding | 1/4" Dart Drop Impact (ft-lb) | UL 94 V-O Pass/Fail 1/4" thick | Product Number | MOLDING CONDITIONS Fill Time (sec) | Extr. Pres., barrel (psi) | Extr. Pres., discharge (psi) | Extr. RPM |
|---|---|---|---|---|---|---|---|---|
| 0 | 7.7 | 3 | Pass | 19 | ~20 | 1000 | 3200 | 12 |
| 0.5 | 6.7 | 26 | Pass | 20 | 21 | 0 | 2900 | 18 |
| 1.0 | 8.4 | 26 | Pass | 21 | 3-6 | 750 | 3000 | 18 |
| 2.4 | 8.4 | 22 | ---- | 22 | 1 1/2 | ---- | 3100 | 18 |
| 3 | 8.8 | 22 | Marginal Pass | 23 | 3-4 | 0 | 2700 | 18 |

Further evidence of the reduced combustibility nature of the HDPE/ATH/silane product described, with preferred concentrations of 40/60/1 parts, respectively, was obtained from the Ohio State University--Rate of Heat Release and Smoke test and the Limiting Oxygen Index test. Table IX shows the conditions and results from these tests. Note that for the 60 percent ATH samples without compatibility agent (Product No. 24) and with compatibility agent (Product No. 25-27), there was no (zero) smoke generation and very low rate of heat release (maximum of 225 KW min/$m^2$. The structural foam article of Product No. 28 had a total of 865 smoke/$m^2$ and a total heat release of 1721 KW min/$m^2$. As a point of reference, the data for maple wood (Product No. 29) show that it has a total heat release of 883 KW min/$m^2$ and a smoke release of 148 smoke/$m^2$.

The Limiting Oxygen Index test measures the concentration of oxygen required in a specific chamber to just support combustion of a given size sample. As seen in Table X, the oxygen index of unfilled polyethylene is ~17.6 percent whereas the polyethylenes filled with 60 percent ATH (with or without compatibility agents) have oxygen indices of ~28 percent. This is a marked reduction of combustibility.

TABLE IX

All samples were prepared with HDPE (8 MI, 0.96 sp. gr.). The samples with ATH were prepared with 1 part of compatibility agent No. 2 except as noted in the table.

BAD ORIGINAL

All samples were oriented horizontally to the flame except Product No. 26 which was vertical. The heat flux was 2 watts/$cm^2$. Mold No. 2 was used to mold the articles. All samples were 1/4 inch thick. Product No. 28 is a structural foam molded article of sp. gr. = 0.58.

TABLE IX

| Product No. | 24 | 25 | 26 | 27 | 28 | 29 (Maple) (Wood ) |
|---|---|---|---|---|---|---|
| Parts of HDPE | 40 | 40 | 40 | 40 | 100 | 0 |
| Parts of ATH | 60 | 60 | 60 | 60 | 0 | 0 |
| Compatibility Agent (parts) | 0 | 1 | 1 | 1 | 0 | 0 |
| Percent $H_2O$ | 5 | 8 | 7.6 | 7.6 | 0 | 0 |
| Back Pressure (psi) | 400-300 | 300 | 300 | 200 | --- | 0 |
| Total Heat Release $\left(\frac{KW\text{-}min}{m^2}\right)$ | 0 | 176 | 0 | 225 | 1722 | 883 |
| Total Smoke Release (Smoke/$m^2$) | 0 | 0 | 0 | 0 | 865 | 140 |
| Weight loss from burn (gm) | 11.1 | 20.1 | 8.5 | 26.8 | 68.6 | 71.4 |
| Molding Conditions Fill Time (sec.) | 7 | 3 | 2.5 | 2 | --- | |
| Extr. Pressure Barrel (psi) | 1250 | 1000 | ∿1000 | ∿1000 | 1800 | |
| Extr., Pressure Discharge (psi) | 3500 | 3100 | ∿3100 | ∿3100 | 3400 | |
| Extr., Speed (RPM) | 12 | 12 | 12 | 12 | Set=2 | |
| Press Tonnage(tons) | 50 | 50 | 50 | 50 | 30 | |

TABLE X

The HDPE is the same as that used previously. Mold No. 1 was used and the samples were molded in the 50 ton press. The same ATH as described previously was used.

TABLE X

| Product Number | Parts HDPE | Parts ATH | Compatibility Agent and parts thereof | LOI (%) (b) | MOLDING CONDITIONS Fill Time (sec) | Extr. Pres. barrel (psi) | Extr. Pres. discha. (psi) | Extr. Speed RPM |
|---|---|---|---|---|---|---|---|---|
| 30 | 40 | 60 | No. 2/1 | 28.7 | 2 | 1100 | 3000 | 16 |
| 31 | 40 | 60 | --- | 27.5 | 5 | 1100 | 3000 | 12 |
| (a) | 100 | --- | --- | 17.8, 17.4 | --- | ---- | ---- | --- |

(a) Robert J. Schwarz, "Fire Retardation of Polyethylene and Polypropylene," in William C. Kuryla and A. J. Papa, Flame Retardancy in Polymeric Materials, NY, M. Dekker, p. 83, Chapter 2, 1973.

(b) ASTM D 2863-70

It is to be noted that all melt index values set forth herein are in gm/10 min. and determined in accordance with ASTM-D-1238E specifications; all heat distortion temperatures determined in accordance with ASTM-D-648 specifications.

As referred to herein, the Dart Drop impact test consists of dropping a weighted dart (about two pounds) with a 1-1/2 inch hemispherical tip into a specimen firmly fixed by a 3 inch diameter circular clamp. The failure is noted by the appearance of a slight crack on the surface of the part.

Claims:-

1. A process for the production of injection molded thermoplastic articles having reduced combustibility comprising: maintaining a mold cavity at a pre-selected back pressure sufficiently high substantially to prevent foaming of a thermoplastic melt to be introduced therein; and injecting thermoplastic melt into the mold cavity under a pressure in excess of the back pressure to fill the mold cavity; the said thermoplastic melt containing from about 50 to 70% by weight of alumina trihydrate and from about 1 to 12% by weight of water as a liquid processing aid.

2. A process as claimed in claim 1 wherein the thermoplastic melt contains from about 55 to 65% by weight of alumina trihydrate.

3. A process as claimed in claim 2 wherein the thermoplastic melt contains about 60% by weight of alumina trihydrate.

4. A process as claimed in any one of the preceding claims wherein the thermoplastic melt is introduced into the mold cavity at a pressure of the order of about 2500 to 3500 psi.

5. A process as claimed in any one of the preceding claims wherein the mold cavity is maintained at a back pressure of about 200 to 450 psi.

6. A process as claimed in any one of the preceding claims wherein the thermoplastic melt is a polyolefin-containing melt.

7. A process as claimed in claim 6 wherein the polyolefin-containing melt is a polyethylene-containing melt.

8. A process as claimed in claim 7 wherein the polyethylene-containing melt is a high density polyethylene.

9. A process as claimed in claim 7 wherein the melt consists essentially of a polyethylene, alumina trihydrate and water.

10. A process as claimed in claim 8 wherein the melt consists essentially of high density polyethylene, alumina trihydrate and water.

11. A process for the production of injection molded high density polyethylene articles having reduced combustibility and high impact strength in accordance with claim 1, wherein the high density polyethylene material melt contains (a) from about 50 to 70% by weight of alumina trihydrate, (b) from about 1 to 12% by weight of water as a processing aid, and (c) from about 0.5 to 3% by weight of a methoxy polyethylene glycol propyltrimethoxy silane having the general formula:

$$CH_3O(C_2H_4O)_n\ C_3H_6\ Si(OCH_3)_3,$$

wherein n represents the average number of ethoxy repeat units between about 3.0 and 11.0.

12. A process as claimed in claim 11 wherein n equals about 7.2

13. A process as claimed in claim 11 or claim 12 wherein the high density polyethylene melt contains from about 55 to 65% by weight of alumina trihydrate.

14. A process as claimed in claim 13 wherein the high density polyethylene melt contains about 60% by weight of alumina trihydrate.

15. An injection molded thermoplastic article when produced by a process as claimed in any one of the preceding claims.

MGB/SJW/MCM/EA017

FIG. 1

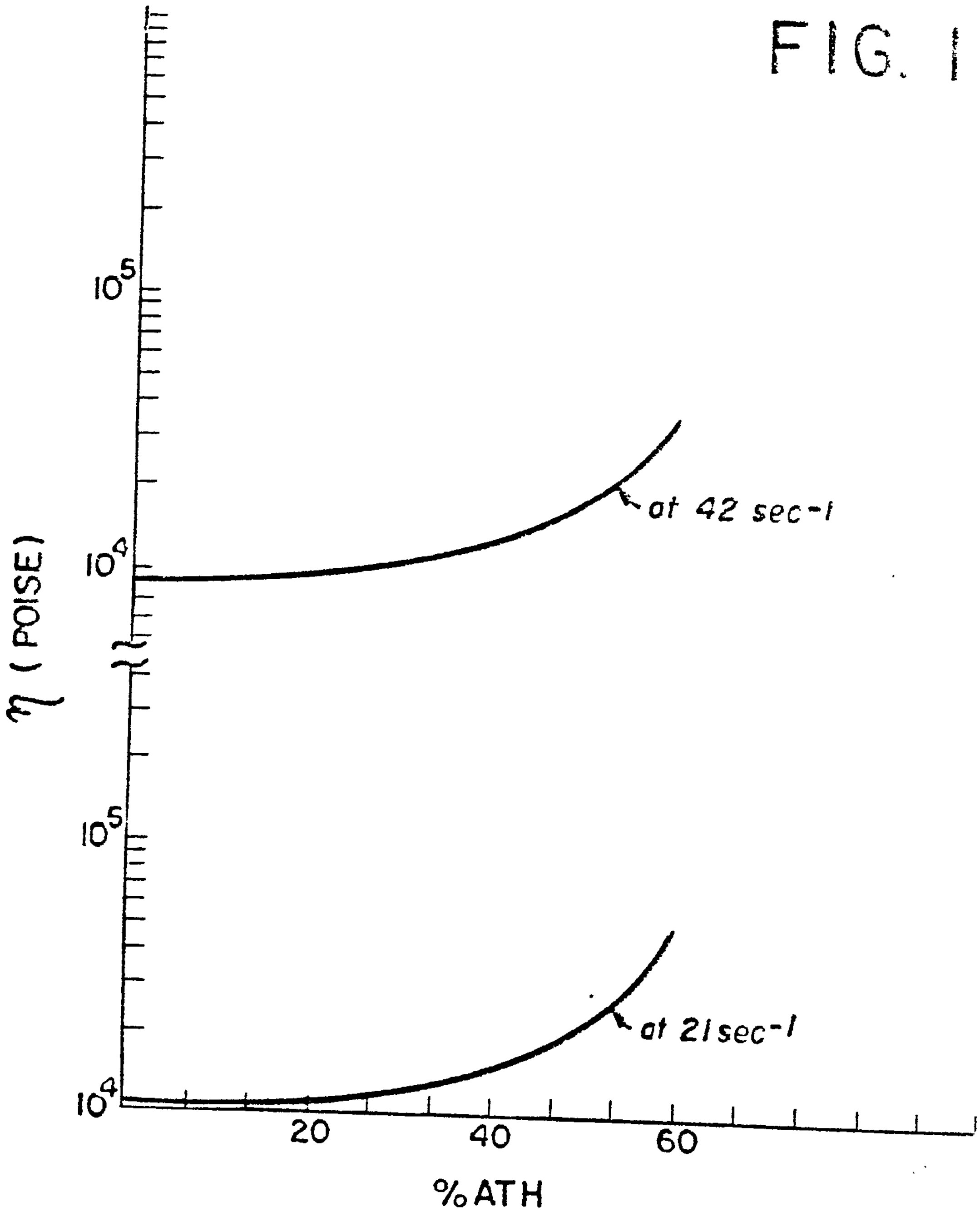

FIG. 2

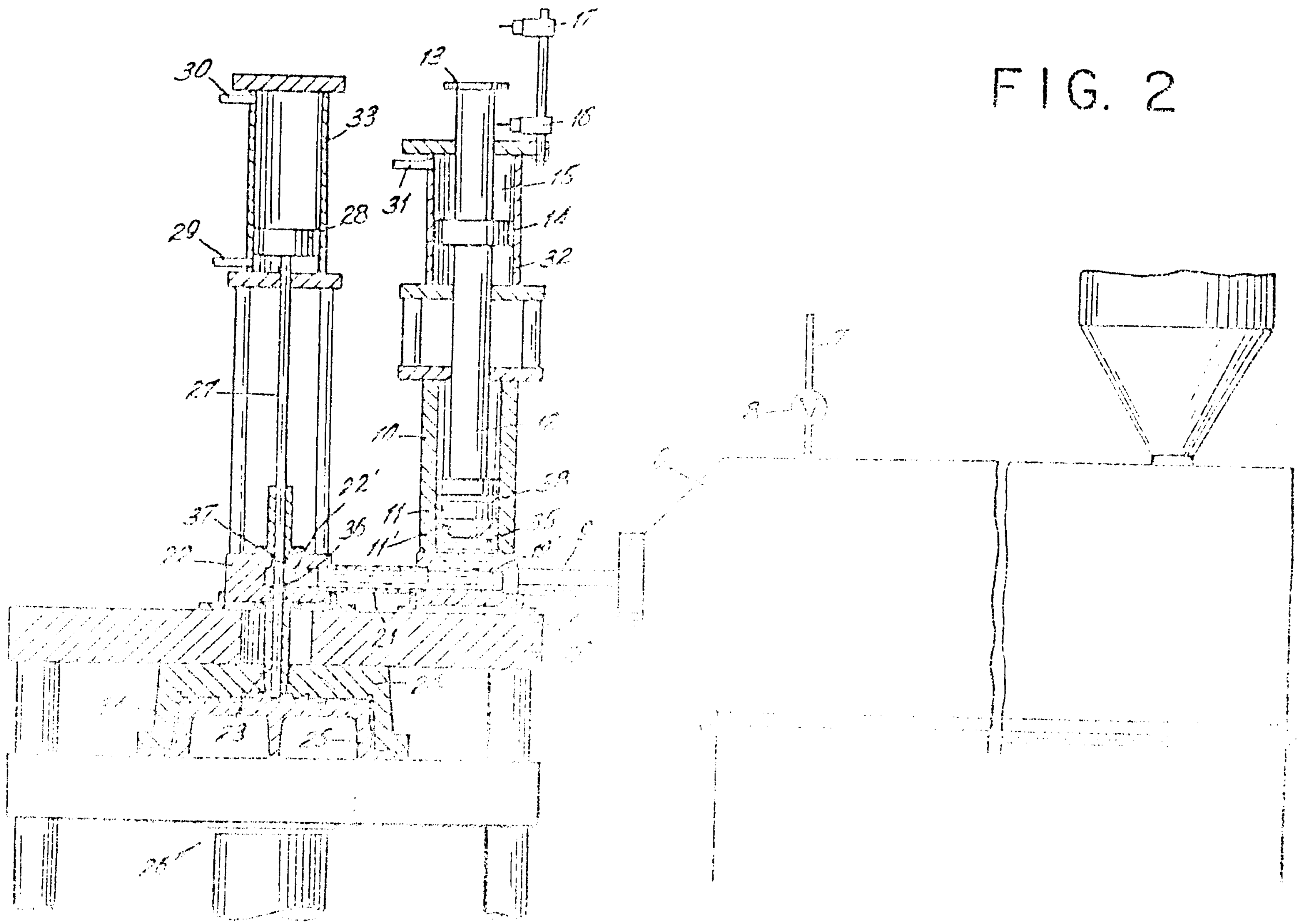

FIG. 3

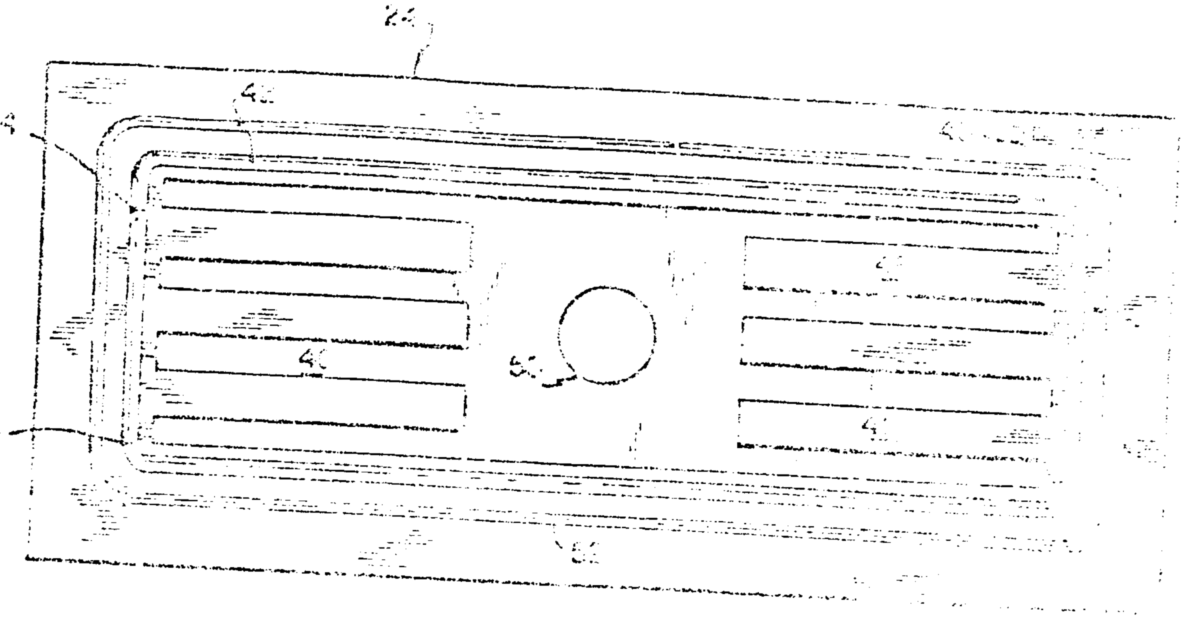


FIG. 4

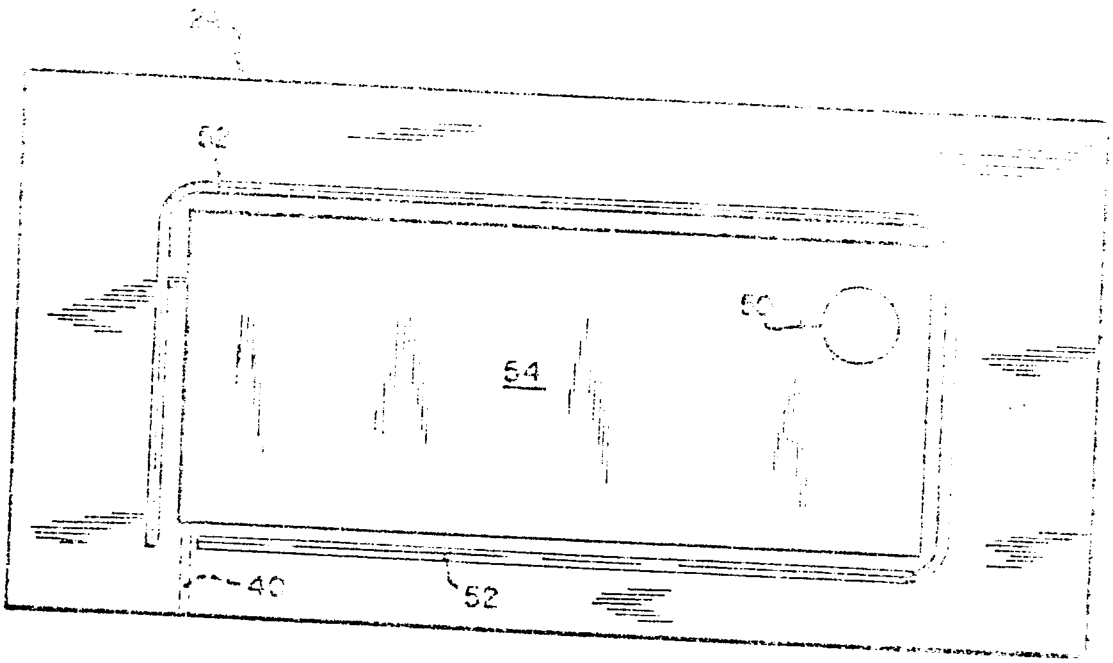

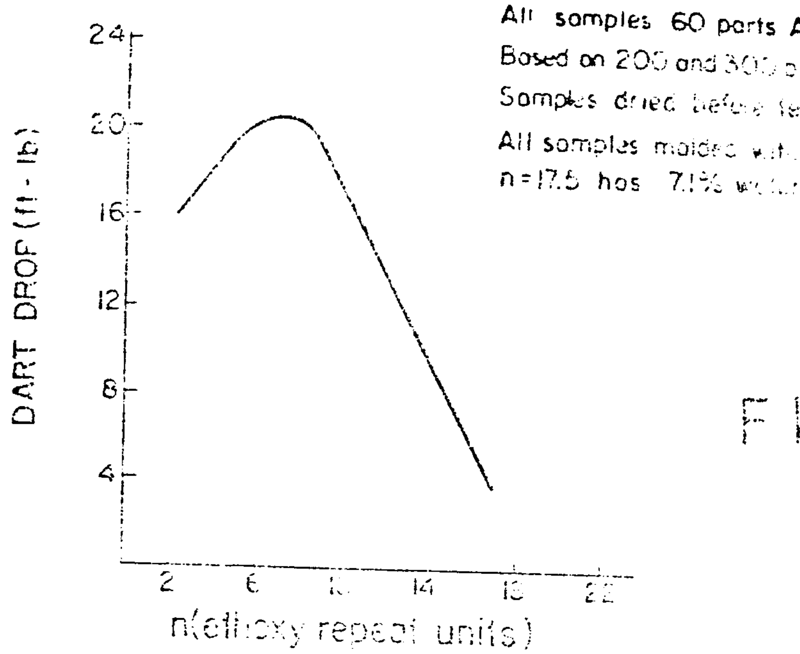


All samples 60 parts ATH/40 parts HDPE
Based on 200 and 300 psi back pressure
Samples dried before testing
All samples molded with 10% water except n=17.5 has 7.1% water

FIG. 5

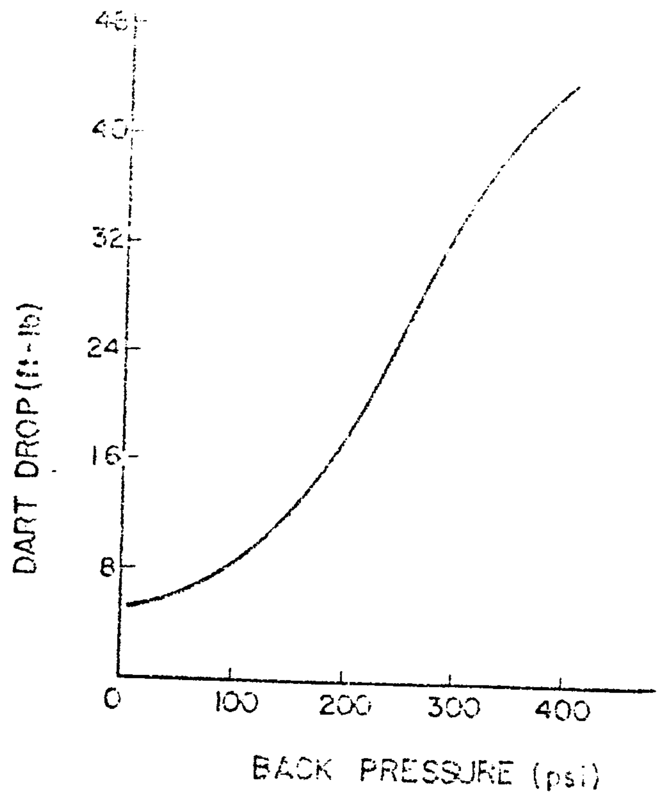


Molded with 1% Compatibility agent
7-6% water used in molding
Samples dried before testing

FIG. 6

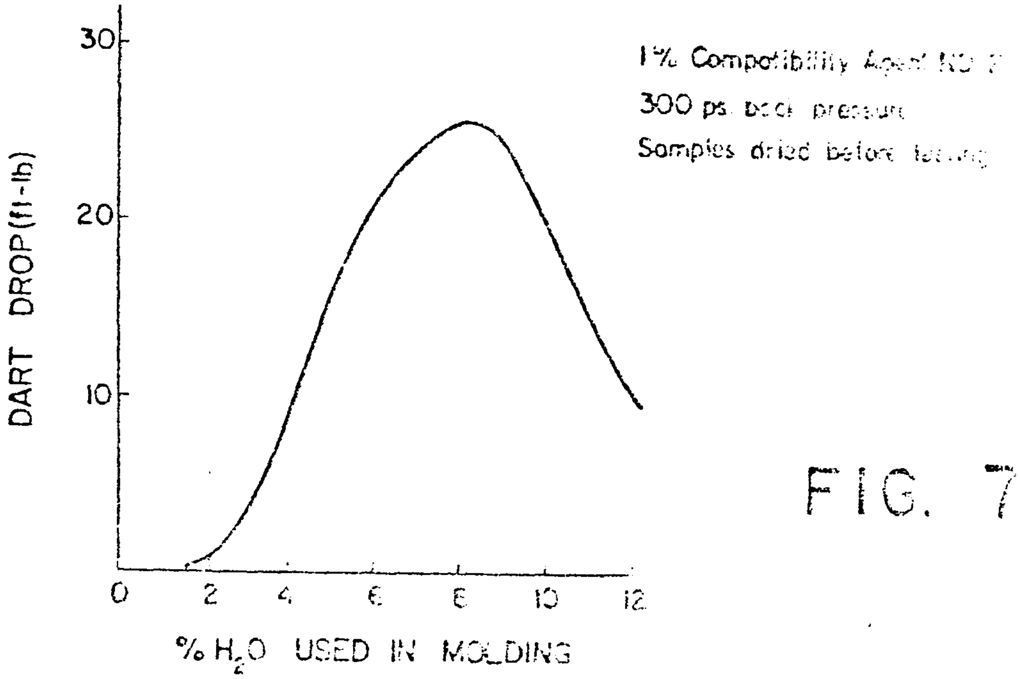
30
20
10
DART DROP (ft-lb)
0
2
4
6
8
10
12
% $H_2O$ USED IN MOLDING
1% Compatibility Agent NO. 2
300 psi back pressure
Samples dried before testing

FIG. 7

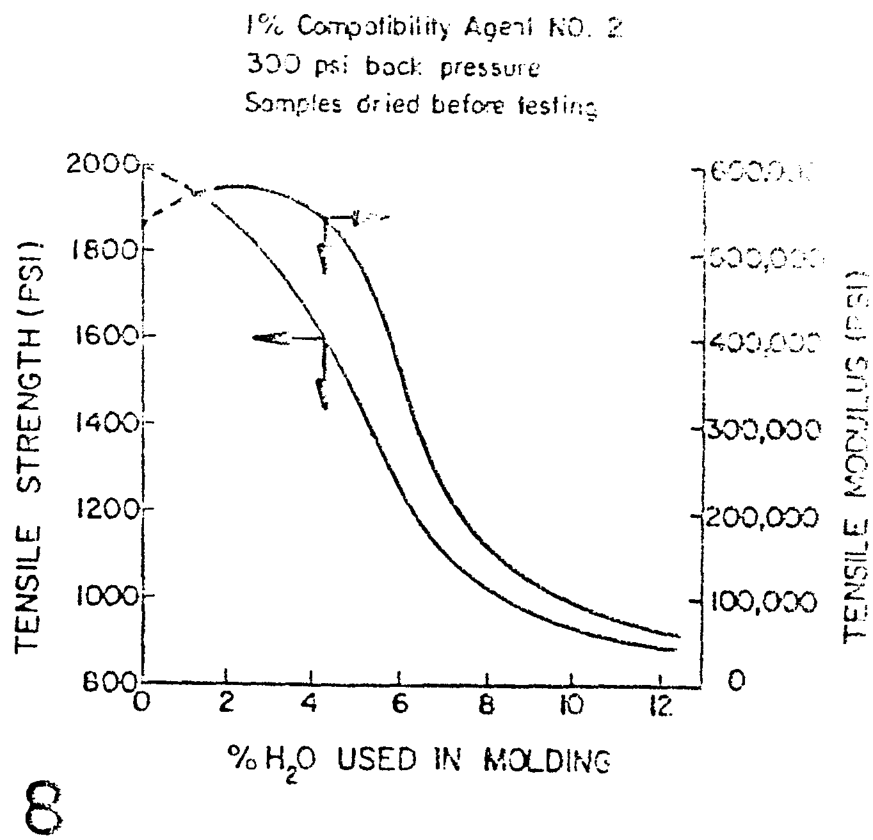
1% Compatibility Agent NO. 2
300 psi back pressure
Samples dried before testing
2000
1800
1600
1400
1200
1000
800
TENSILE STRENGTH (PSI)
600,000
500,000
400,000
300,000
200,000
100,000
0
TENSILE MODULUS (PSI)
0
2
4
6
8
10
12
% $H_2O$ USED IN MOLDING

FIG. 8

FIG. 9

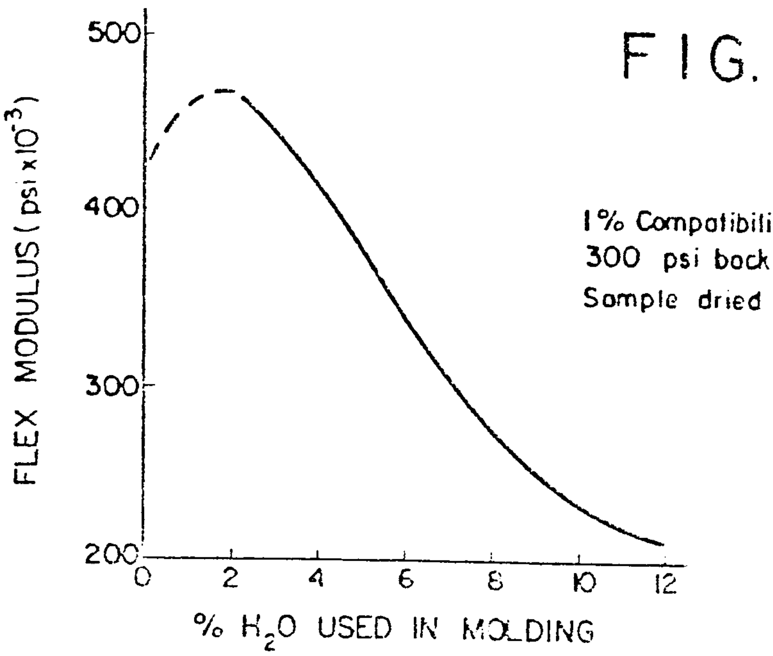


1% Compatibility Agent NO. 2
300 psi back pressure
Sample dried before testing

FIG. 10

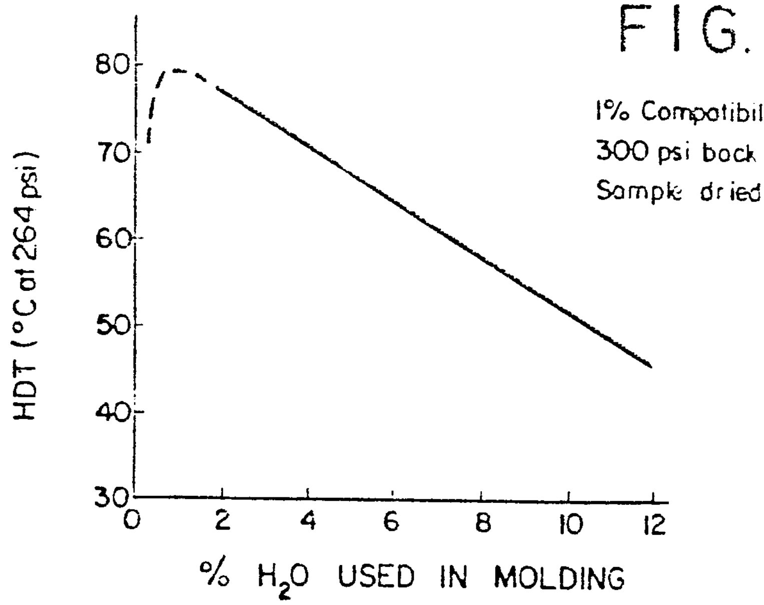


1% Compatibility Agent NO. 2
300 psi back pressure
Sample dried before testing

0002546

European Patent Office

# EUROPEAN SEARCH REPORT

Application number

EP 78 300 614.1

## DOCUMENTS CONSIDERED TO BE RELEVANT

| Category | Citation of document with indication, where appropriate, of relevant passages | Relevant to claim |
|---|---|---|
| - | DE - A - 2 457 980 (MITSUBISHI PETRO-CHEMICAL) * page 6, line 22 to page 7, line 4; example 3 * | 1 |
| A | DE - A - 2 228 978 (NATIONAL DISTILLERS) * page 4, line 29 to page 5, line 2; page 10, line 27 to page 11, line 24; page 12, line 6 to page 13, line 22 * | 1,11 |
| A | DE - A - 2 421 787 (SHOWA DENKO) * complete document * | |
| D | US - A - 3 268 636 (R.G. ANGELL) * column 1, line 66 to column 2, line 7; fig. 2, 3 * | |
| D | US - A - 3 436 446 (R.G. ANGELL) * abstract; fig. 1 * | |
| D | US - A - 3 988 403 (R.G. ANGELL et al) * abstract; fig. 1, 2 * | |

CLASSIFICATION OF THE APPLICATION (Int. Cl.)

B 29 F 1/00
C 08 K 3/22
C 08 L 23/00

TECHNICAL FIELDS SEARCHED (Int. Cl.)

B 29 F 1/00
C 08 K 3/22
C 08 L 23/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 15-02-1979 | BRUCK |